# EUROPEAN PATENT SPECIFICATION

(11) **EP 3 431 918 B1**
(45) Date of publication and mention of the grant of the patent: **31.03.2021**
(21) Application number: 17305967.6
(22) Date of filing: 20.07.2017
(51) Int. Cl.: G01B 9/02, G01B 11/06, G02B 21/00

(54) **MULTICHANNEL CONFOCAL SENSOR AND RELATED METHOD FOR INSPECTING A SAMPLE**
MEHRKANALIGER KONFOKALER SENSOR UND ZUGEHÖRIGES VERFAHREN ZUR UNTERSUCHUNG EINER PROBE
CAPTEUR CONFOCAL MULTICANAL ET PROCÉDÉ ASSOCIÉ PERMETTANT D'INSPECTER UN ÉCHANTILLON

(43) Date of publication of application: 23.01.2019
(73) Proprietor: Fogale Nanotech, 30900 Nimes (FR)
(72) Inventor: COMBIER, Tristan, 38000 GRENOBLE (FR); GASTALDO, Philippe, 38530 PONTCHARRA (FR)
(74) Representative: IPAZ

(56) References cited:
- WO-A1-2016/094940
- FR-A1- 3 006 758
- US-A1- 2012 019 821
- US-A1- 2013 135 715
- US-A1- 2016 357 007
- US-B1- 9 494 529

## Description

### Field of the invention

The present invention relates to a high density multichannel confocal sensor, for use with confocal, chromatic confocal, or interferometry detection schemes. It also relates to a method for inspecting a sample or a substrate implementing said sensor. The field of the invention is, but not limited to, 2D-3D inspection and metrology systems.

### Background of the invention

Several techniques are known for bidimensional (2D) or tridimensional (3D) surface mapping and thickness measurements, for semiconductor or other industrial applications.

Among these techniques, several of them use a confocal detection scheme. Such confocal detection scheme comprises a light emitting aperture and a light collection aperture on one side of a focusing lens arrangement whose optical conjugates (or images) through that focusing lens arrangement are superposed. Such arrangement ensures that the light collected by the collection aperture corresponds essentially to the light issued from the emitting aperture which is reflected back by the sample at the focusing or conjugate point. By implementing such a detection scheme, lateral cross-talk between neighboring channels and collection of out-of-focus light may be avoided, for instance.

A confocal detection scheme may be used for instance for implementing an interferometric detection. The reflected light is spectrally analyzed on a spectral or color detector, and thicknesses or distances between layers may be retrieved by analyzing the resulting interference spectrum.

A confocal detection scheme may also be used for instance for implementing a confocal detection. In that case, the sensor, which preferably implements a high-NA focusing lens arrangement, is moved in height over the sample surface. The distance for which a maximum of intensity is detected on an intensity detector is representative of the local height of the surface.

A confocal detection scheme may also be used for instance for implementing a chromatic confocal detection. The technique relies on the use of a focusing lens arrangement with a chromatic element or lens with an enhanced chromatism, whose focal length depends strongly on the optical wavelength. Each wavelength of the light crossing such lens is focused at a different distance, or in a different focal plane. As previously explained, the chromatic lens is embedded in a confocal set-up with emitting or source apertures and collection or detection apertures placed at confocal planes of the chromatic lens, so as to reject out-of-focus light. When a reflecting interface is placed in front of the chromatic lens, only the light with the wavelength whose focal plane corresponds to the position of the interface is transmitted by the detection aperture.

In order to obtain a 3D height information, detection is made by a spectral sensor or spectrometer, which comprises usually a dispersing element and a sensor (CCD or CMOS) to acquire the intensity spectrum of the light. The height (or distance) of the interface relative to the chromatic lens is obtained by analyzing the intensity spectrum of the detected light.

The Chromatic confocal technique allows also obtaining an in-plane image intensity or grey-level information (2D information) with an extended depth of focus. In that case, an intensity detector is used, which provides the intensity of the incident light over the whole spectrum, without any spectral selectivity. The height information, which relies in the spectral content is lost, but the intensity detector provides an intensity (grey-level) information corresponding only to the light reflected on the sample at the wavelength focused on its surface. So an image with an optimal lateral resolution may be obtained over a depth range given by the spectral dispersion of the chromatic focusing lens arrangement.

Such set-ups allow measuring distances on a single point at the time. Inspecting large surfaces may be very time-consuming. Acquisition speed may be improved by providing several measurement channels in parallel.

It is for instance known to use fiber optics bundles such as described in the document US 2012/0019821, which discloses a multichannel chromatic confocal system. One optical fiber modules direct the light from the source towards the chromatic lens, and a second optical fiber module is coupled to the chromatic dispersion objective so as to spatially filter the object light, thereby forming a filtered light. It is also known to use fiber couplers which direct the light from the source towards the chromatic lens, and the reflected light towards the detectors.

Such configurations have the advantage that the source and detection apertures are the end of a measurement fiber.

However, the use of fiber optics elements has several drawbacks, notably:
- they are difficult to use or manufacture with a very large number of channels (large fiber bundles);
- the optical fiber geometry (core to cladding ratio) set by the manufacturing requirements impose a limit on the achievable channel density. The total useful area constituted by the fiber cores is diluted by the total glass area of the optical fiber. This, for a given surface to illuminate, reduces the lateral resolution;
- the manufacturing of optical fibers and bundles impose constraints that makes difficult the matching of fiber cores pitch (separation between 2 beams) with the detection device pixels pitch;
- due do their principle of operation using coupling of modes between fiber cores, the splitters or couplers made with optical fibers have a coupling ratio which is very dependent with the wavelength, which may introduce bias in the measurements.

Reference is also made to documents FR 3 006 758 A1, US 2013/135715 A1, and US 9 494 529 B1, which disclose a multichannel chromatic confocal sensor, to document WO 2016/094940 A1, which describes methods and apparatus for multichannel optical coherence tomography, and to document US 2016/357007 A1, which describes configurations for fibre optic endoscopes employing fixed distal optics and multicore optical fibres.

It is an object of the invention to provide a confocal device for implementing detection schemes such as chromatic confocal, confocal and interferometry allowing implementation of a large number of channels.

It is an object of the invention to provide such confocal device allowing small pitch between the illuminating light spots delivered by the multiple channels on the measured substrate.

It is an object of the invention to provide a such confocal device allowing high lateral and high depth resolution (and/or extended depth range) for a confocal device with a large number of channels.

It is also an object of the invention to provide such confocal device with a large number of channels which reduces the manufacturing constraints.

It is also an object of the invention to provide such confocal device that decouple the requirements of the illuminating stage and those of the detection stage with limited alignment elements and steps.

It is also an object of the invention to provide such confocal device with a large number of channels which is mechanically robust.

It is also an object of the invention to provide such confocal device with built-in alignment means to facilitate and automate its assembly.

It is also an object of the invention to provide such confocal device with optimal optical and metrological characteristics.

### Summary of the invention

These objects are obtained with a multichannel confocal sensor comprising at least one light source, at least one focusing lens arrangement, at least one optical detector, and further comprising:
- a first integrated optics circuit arranged for splitting a light beam coming from said at least one light source into a plurality of emitted light beams applied to a high-density array of emitting apertures,
- a second integrated optics circuit arranged for collecting on a plurality of collection apertures a plurality of reflected light beams from a sample to be inspected and for transferring said reflected light beams to said at least one optical detector,
- a beam splitter arranged (i) for directing said emitted light beams from said first integrated optics circuit to said inspected sample through said at least one focusing lens arrangement and (ii) for directing said reflected light beams from said measured sample through said at least one focusing lens arrangement into said second integrated optics circuit.

The first integrated optics circuit comprises arrays of emission channel waveguides. In an advantageous embodiment of the sensor according to the invention, the emission channel waveguides are achromatic or at least substantially achromatic within the spectral range of the light source, or the used spectral range.

The emission channel waveguides may have an end forming the emitting apertures, directly (for instance on an edge of the first integrated optics circuit) or through some optics or lens elements.

The first integrated optics circuit may further comprise Y-junctions splitters, achromatic or at least substantially achromatic within the spectral range of the light source, or the used spectral range.

In another advantageous embodiment of the sensor according to the invention, the second integrated optics circuit comprises arrays of optical detection channel waveguides, achromatic or substantially achromatic within the spectral range of the light source, or the used spectral range.

The optical detection channel waveguides may have a first end forming the collection apertures, directly (for instance on an edge of the first integrated optics circuit) or through some optics or lens elements.

The optical detection channel waveguides and the optical emission channel waveguides may have a same spacing at, respectively, the collection apertures and the emitting apertures side.

In a preferred version of the invention, the optical detection channel waveguides have a larger diameter than those of the optical emission channel waveguides, at least at the collection aperture side.

The optical detection channel waveguides may have a larger angle acceptance at the collection aperture side than those of the optical emission channel waveguides at the emission aperture side.

The optical emission waveguides comprise single mode waveguides, and the detection channel waveguides may comprise multimode waveguides, or waveguides with such behavior at least within the spectral range of the light source, or within the used spectral range.

The detection channel waveguides are preferably designed to match on a second end the aperture and/or pixel pitch of detection elements within an (or said at least one) optical detector, directly or in a conjugate plane (for instance through an imaging and/or spectrally dispersing element).

The detection channel waveguides may be arranged so that said at least one optical detector is out-of-sight of stray light coupled in the second integrated circuit between the detection channel waveguides at the collection apertures.

The detection channels may for instance have a curved or an angled shape, so that their first and second ends are not within the same orientation. They may also have a "S" shape so that the first and second ends have the same orientation, but with a lateral deviation.

At least one of first and second integrated optics circuits may comprise planar waveguides on a planar substrate. Or in other words, the first and/or the second integrated optics circuits may be done using a planar waveguide deposition or inscription technique on a substrate.

The first and/or the second integrated circuit may be respectively done by combining and assembling several subpart integrated optics circuits, or several integrated optics circuits made on different substrate pieces (for instance if an integrated circuit is too large for being done on en single piece of substrate). The subpart circuit may be for instance glued together with the waveguides aligned.

In an advantageous embodiment, the sensor according to the invention may comprise first and second integrated optics circuits made on planar substrates arranged with an edge respectively facing a side of the beam splitter in the form of a beam splitter cube. The beam splitter cube may be of course of a square shape, or of any parallelepipedal shape (bar, ...)

The first and second integrated optics circuits further may advantageously include alignment optical channel waveguides.

The first and second integrated optics circuits and the beam splitter may be advantageously fixed permanently to each other, for instance by gluing them together.

According to some modes of realization, the focusing lens arrangement may comprise a chromatic lens with an extended axial chromatism, for focusing the light from the emitting apertures at different distances, depending on the wavelength, on the sample.

According to some modes of realization, the focusing lens arrangement may comprise only achromatic or essentially achromatic elements, for focusing the light from the emitting apertures on the sample.

According to some modes of realization, the focusing lens arrangement may comprise a reference plate, for generating a reference beam for use in interferometric detection modes.

In all modes of realization, the focusing lens arrangement may advantageously comprise, or being constituted of, a telecentric lens system.

According to some modes of realization, the optical detector may comprise an intensity optical detector with an array or a matrix of detection elements or pixels, with pixels respectively receiving the light, over its whole spectrum, collected by a single collection aperture.

According to some modes of realization, said at least one optical detector may comprise a spectral optical detector with a filtering or spectrally dispersing element and an array or a matrix of detection elements or pixels, with pixels respectively receiving the light, over a subpart of its spectrum, collected by a single collection aperture.

According to another aspect of the invention, it is proposed a method for inspecting a sample, implemented in a multichannel confocal sensor according to the invention, comprises the steps of:
- emitting a light beam from at least one light source,
- splitting said light beam into a plurality of emitted light beams,
- directing said plurality of emitted light beams, through a focusing lens arrangement, onto said inspected sample,
- collecting reflected light beams from said inspected sample through said focusing lens arrangement, and
- directing said collected reflected light beams to at least one optical detector,

In the inspection method according to the invention
- the splitting step is implemented in a first integrated optics circuit,
- the collecting step is implemented in a second integrated optics circuit, and
- the light beam directing steps are implemented in a beam splitter.

According to some modes of implementation, the method of the invention may further comprise steps of: Varying the height of the sensor relative to the sample; and using an achromatic focusing lens arrangement and an intensity optical detector, detecting intensity over the full spectrum of collected reflected light beams. In that case, the sensor and the method of the invention implements a confocal detection scheme.

According to some other modes of implementation, the method of the invention may further comprise steps of: Using an achromatic focusing lens arrangement and a spectral optical detector, detecting spectra of collected reflected light beams. In that case, the sensor and the method of the invention implements a spectral interferometric detection scheme.

According to some other modes of implementation, the method of the invention may further comprise steps of: Using a chromatic focusing lens arrangement and a spectral optical detector, detecting spectra of collected reflected light beams. In that case, the sensor and the method of the invention implements a 3D chromatic confocal detection scheme.

According to some other modes of implementation, the method of the invention may further comprise steps of: Using a chromatic focusing lens arrangement and an intensity detector, detecting intensity over the full spectrum of collected reflected light beams. In that case, the sensor and the method of the invention implements a 2D chromatic confocal detection scheme.

So, the invention implements a multichannel confocal detection sensor core based on a first integrated optics circuit, a second integrated optics circuit and a beam splitter.

A first integrated optics circuit including arrays of achromatic channel waveguides is used to transmit a detecting light, usually broadband, to create a high-density array of beams or measurement spots through a focusing lens arrangement. The high-density beam array covers a wide area on the measured substrate, while allowing a high lateral resolution.

A second integrated optics circuit also including arrays of channel waveguides collects the reflected light from a measured sample and transfer the information to an optical detection stage.

This second detecting integrated optics circuit decouples the constraints imposed on the first optics circuit channels by having the waveguide arrays adjusted to combine the functions of spatial filtering of the unfocused light, reducing crosstalk between channels, maintaining the lateral high-resolution set by the channel arrays from the first circuit and still matching the pitch and apertures requirements of the detection elements.

The optical channel waveguide design and monolithic nature of the integrated circuits may be combined to minimize and automate the assembly and alignment steps to build a mechanically stable device.

Integrated optics circuits are designed and produced to meet the combined requirements of high throughput and high position and resolutions in confocal, chromatic confocal of interferometric measurements.

It implies a set of divergent constraints on the device design and assembly. One of them is that a high-density parallel measuring channel array is required to increase the measurement throughput. The array will then have a high count of measuring channels and minimum separation between them without compromising the resolution of the system by enabling crosstalk between the adjacent optical channels.

The channel optical waveguides constituting the measuring channels must also be compatible with the specificity of a confocal detection system, either chromatic or interferometric: they need to guide, split and collect in an achromatic way the usually broadband light but also be compatible and maintain the power density required per measuring channel to enable a noise-free detection.

The optical waveguide channels need to optimize the collection of the reflected light and direct this light efficiently to the detection devices. In addition, increasing the resolution and the measuring channel count will lower the tolerance for aligning the different function elements.

In this invention, integrated optics circuits are designed and assembled to provide a solution to those constraints.

Due to the use of the integrated optical components and the optical waveguide technology, it is possible to make a device with a large number of measurement channels (such as a few hundred) which is very compact.

At least two optical integrated circuits and a beam splitter component are used to decouple the requirement on the channel optical waveguide designs and optimize the light coupled in and out of the optics circuits. The performances are set during the design stage of the optics circuit and channel waveguides and, due to the nature of the integrated optics technology, can be easily and cost-effectively maintained and reproduced in a production environment.

Only a few elements have to be assembled and aligned. This is a significant difference and improvement over the optical fiber bundle approach.

A first integrated circuit is used to create the high count, high density measuring channels by splitting the light from a broadband source. Single mode channel waveguides are preferably used to build achromatic and low-loss power splitters. They emit light with small beam diameters (few microns) because of the diffraction limit achievable with single mode waveguide propagation and are distributed linearly to form a small pitch (from a few microns to a few tens of microns) arrays to maintain high density. A low numerical aperture (NA), also achievable thanks to the single mode waveguide propagation, make the emitted light easily managed by the focusing lens arrangement.

A second integrated circuit is built to accomplish the function of collecting the reflected light (inputs of the circuit) from a measured substrate interface that went through the focusing lens arrangement and direct it to a detection element (outputs of the circuit).

The optical channel waveguides of the second integrated circuit can be designed to match very accurately the positions of the optical channel waveguides made in the first optics circuit. They can be made with larger diameter and larger angle acceptance to guide multimode light and thus allow a better collection efficiency of the reflected light.

Stray light which is light coupled into the chip but not propagated by the optical channel waveguides can be eliminated thanks to curvature of the channel waveguides along their propagation direction. Moreover, the optical channel waveguide can be designed to match the apertures and pixel pitch of the detection elements.

The different circuits and the beam splitter can be aligned and fixed permanently relatively to each other to realize a mechanical stable device. This approach can be easily automated due to the mass production nature of the optical integrated technology.

It is to be noted that the arrangement of the invention with two separate integrated optics circuit and a beam splitter provides unique advantages over classical multichannel optics sensors of the prior art.

As previously explained, the use of integrated optics circuit with planar waveguides allows higher density and number of measurement channels, and very easy and accurate adjustments of measurement channel pitch or separation compared to optical fiber based architectures. For instance, it is easy to build systems with several hundreds of channels, whereas fiber optics bundles with more than 100 fibers are difficult to manage. In addition, the spacing of planar waveguides is easy to adjust very accurately during the manufacturing of the component, while spacing of fiber in bundles require complex assemblies in V-grooves.

The arrangement of the invention has also unique advantages over sensors architectures based on couplers or Y-junctions with a single common optical aperture used as emitting aperture for the emission of the light and collection aperture for collecting the back-reflected light. In the invention, the emitting aperture and the collection aperture may be designed differently, and optimized.

For instance, it is preferable to implement a single mode waveguide for doing the emitting aperture. This ensure to produce a measurement spot at diffraction limit, with the best spatial coherence and a low numerical aperture best suited for the focusing optics. For the collection aperture, it is better to use a larger waveguide which allows collecting more light reflected from the object, on a larger numerical aperture, and which allows notably taking into account the enlargement of the spot due to the resolution of the optics. Such waveguide may then be multimode.

### Description of the drawings

The methods according to embodiments of the present invention may be better understood with reference to the drawings, which are given for illustrative purposes only and are not meant to be limiting. Other aspects, goals and advantages of the invention shall be apparent from the descriptions given hereunder:
- Fig. 1 illustrates a first mode of realization of the device of the invention,
- Fig. 2 illustrates a second mode of realization of the device of the invention,
- Fig. 3a, Fig. 3b and Fig. 3c Illustrate some modes of realization of focusing lens arrangement.

### Detailed description of the invention

It is well understood that the embodiments described hereinafter are in no way limitative. Variants of the invention can in particular be envisaged comprising only a selection of the features described below in isolation from the other described features, if this selection of features is sufficient to confer a technical advantage or to differentiate the invention with respect to the state of the prior art. This selection comprises at least one preferred functional feature without structural details, or with only one part of the structural details if this part alone is sufficient to confer a technical advantage or to differentiate the invention with respect to the state of the prior art.

In particular, all the described variants and embodiments can be combined if there is no objection to this combination from a technical point of view. The scope of protection is defined by the appended claims.

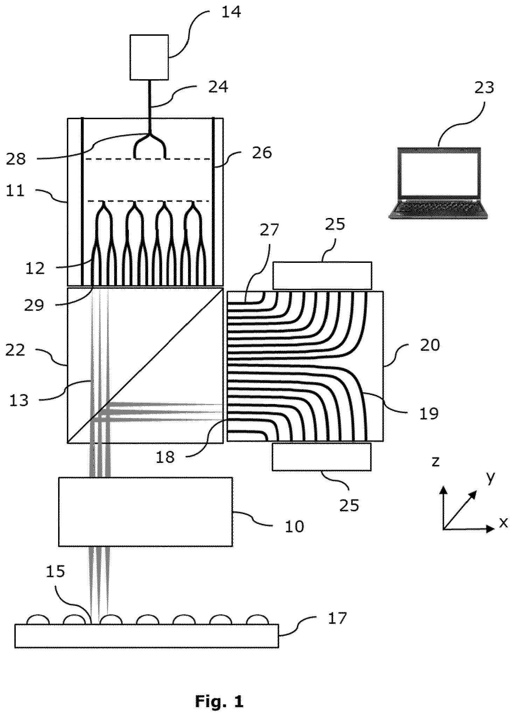

With reference to Fig. 1, a confocal device of the invention will be described.

According to a first mode of realization, it will be described in a chromatic confocal configuration.

In such configuration, the device of the invention comprises a broadband light source 14. The light source 14 may comprise, for instance, a thermal source (halogen for instance), an array of LEDs, or a supercontinuum light source for instance. The light source 14 is optically connected, for instance by an optical fiber 24, to a first optical integrated circuit 11.

This first integrated circuit 11 comprises a plurality of achromatic emission channel waveguides 12 and Y-junctions 28 guiding the light of the light source 14 towards an array of emitting apertures 29, made on an edge of the first optical integrated circuit 11 by terminating end of emission channel waveguides 12. The light exiting these emitting apertures 29 forms the optical measurement channels 13. Preferably, the emission channel waveguides 12 are single-mode within the spectral range of the source (used spectral range). They connect cascaded Y-junctions 28 which split the light of the source 14 between the emitting apertures 29. In Fig. 1, only the first and the last stages of the cascade of Y-junctions is shown for sake of clarity. The emission channel waveguides 12 and the Y-junctions 28 are substantially achromatic within the spectral range of the source, which means notably that the coupling ratio of the Y-junctions 28 is little or not dependent on the wavelength.

After exiting the emitting apertures 29, the light of the optical measurement channels 13 passes through a beam splitter cube 22, and is directed to a focusing lens 10.

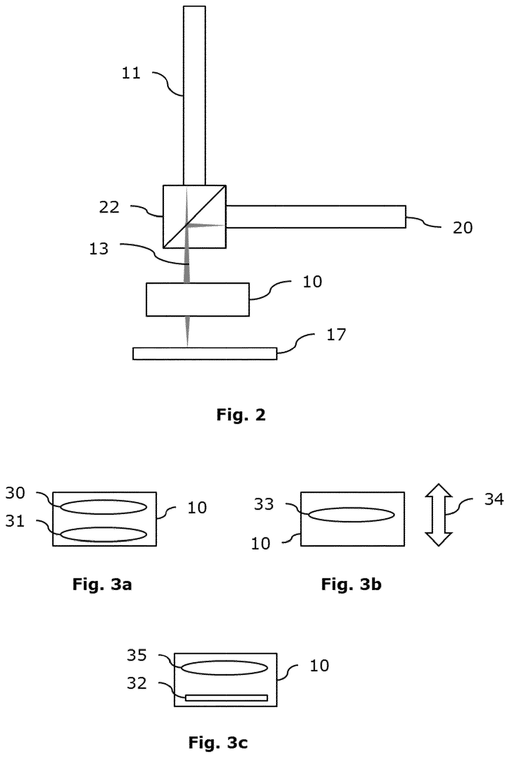

In the chromatic confocal configuration described, the focusing lens arrangement 10 may comprise, as illustrated on FIG. 3a, a collimating lens element 30 and a chromatic lens element 31.

The focusing lens arrangement 10 with the chromatic lens element 31 is designed according to well-known techniques so as to provide a strong chromatic aberration, allowing different optical wavelengths crossing the lens to be focused at different axial distances, i.e. distances along the optical axis of the lens, or along the Z axis as shown in Figure 1.

The light of the respective optical measurement channels 13 is focused by the focusing lens arrangement 10 on an array of respective measurement points 15, or more precisely, thanks to the chromatic lens element 31, along a measurement line 15 in the axial direction of the lens (z-axis in Fig. 1) depending on the wavelengths. The range at which the respective wavelengths of the light source 14 are focused defines the chromatic measurement range.

When an interface of an object 17 is present in the chromatic measurement range, the wavelengths focused on that interface for the respective optical measurement channels 13 are reflected and directed by the beam splitter 22 to collection apertures 18 defined by optical channel waveguides 19 fabricated in a second integrated optics circuit 20.

The light which is not focused on the object 17, or the wavelengths which are not focused on that object 17 are rejected thanks to the confocal configuration of the set-up. Emitting apertures 29 and collection apertures 18 are optical conjugate of the measurement points 15 for the chromatic focusing lens arrangement 10 only at wavelengths focused on the interface of the object 17.

The second integrated optics circuit 20 comprises detection channel waveguides 19, with an entrance end on an edge of the second integrated optics circuit 20 forming the emitting apertures 29. These detection channel waveguides direct the collected reflected light towards optical detectors 25 facing an edge of the second integrated optics circuit 20.

In the chromatic confocal configuration, optical detectors 25 may comprise spectral detectors to create an intensity spectrum of the light issued from each detection channel waveguides 19.

Such spectral detectors may comprise a first lens for collimating the incoming light issued from the detection channel waveguides 19, a dispersing element such as prisms, a diffraction array or a grating for dispersing angularly the different wavelengths of the incoming light, a second lens and a linear or matrixial detector such as a CCD for re-imaging the dispersed light so that different wavelengths are focused on different pixels of the sensor, and a pixel provides a measurement of light intensity at a specific wavelength or within a limited range of wavelength.

Spectral sensors may also comprise color sensors with color filters applied on an array or a matrix of pixels of a CCD or a CMOS sensor, so that a pixel provides a measurement of light intensity at a specific wavelength or within a limited range of wavelength.

In both cases, the intensity spectrum of the light is also obtained by collecting the information on the pixels of the sensor. An intensity spectrum is produced for each detection channel waveguide 19.

A separate CCD or CMOS array may be used for collecting the light of each different detection channel waveguide 19. But preferably, the light from all or at least a plurality of detection channel waveguides 19 is directed towards a CCD or CMOS matrix, the wavelengths or the colors being dispersed along one direction of the matrix.

With the chromatic lens element 31, an interface of the object 17 present in the measurement range gives rise to a peak in the intensity spectrum around the wavelength focused at the corresponding axial position.

The intensity spectrum is analyzed to obtain an axial distance information, or the position of the interfaces or the surface of the object 17 within the measurement range. So, a 3D profile of the object 17 is obtained along the array of optical measurement channels 13. A 3D image can be obtained by scanning the surface of the object with the sensor.

In the chromatic confocal configuration, optical detectors 25 may also comprise intensity detectors for fast 2D imaging. Such detectors comprise a CCD or a CMOS sensor (for instance) with an array or a matrix of pixels. As there is no dispersing element, in that configuration a pixel of the sensor collects the whole light over the full spectrum of the light issued from a detection channel waveguide 19.

Preferably, the light from all or at least a plurality of detection channel waveguides 19 is directed towards a same CCD or CMOS array (line sensor) or matrix.

So, a 2D intensity or gray level line of the object 17 is obtained along the array of optical measurement channels 13, with an optimal lateral resolution over an extended depth of focus. A 2D image can be obtained by scanning the surface of the object with the sensor.

In can be noted that, in the chromatic confocal configuration, optical detectors 25 can comprise simultaneously spectral detectors and intensity detectors, for instance on different optical measurement channels 13, for acquiring simultaneously 2D and 3D information.

The optical detectors 25 may be interfaced with the integrated optics circuits 11, 20 either directly, with the optical detector entrance or sensor facing the end of the detection channel waveguides, or using known interfacing method such as fiber optics 24, V-groove, butt-coupling, microlenses and/or tapers in waveguides, in particular compatible with well automated methods and low coupling power loss.

Detection channel waveguides 19 are preferably designed for allowing multimode propagation. This allows to have them made with a larger cross-section area and larger acceptance angle at the collection apertures 18 so as to maximize the collection of the reflected light from measured points 15 and also minimize the crosstalk due to reflected light captured by adjacent detecting channels.

In the confocal detection scheme described, the detection channel waveguides 19 are further built with an angled (90 degrees) or curved design so as to direct any light not coupled into the detection channel waveguides 19 away from the optical detector 25. In other words, the detection channel waveguides 19 are arranged so that the optical detectors 25 are out-of-sight of the stray light coupled at the collection apertures 18 level.

It can be noted that the angles design of the detection channel waveguides 19 allows integrating optical detectors 25 on two sides of the second integrated optics circuit 20 as illustrated on Fig. 1. Of course, some other modes of realization may implement optical detectors 25 on a single side of the second integrated circuit 20.

As described above, the second (detection) integrated optics circuit 20 may be built and arranged so as to fulfill the following characteristics and requirements:
- match the detection channel waveguide 19 array pitch at its entrance (or the collection apertures 18 array pitch) to the first circuit emitting channel waveguide 19 array pitch (or the emitting apertures 29 array pitch) of the first integrated circuit 11;
- have multimode guides (larger dimensions and acceptance angle) for better light collection of the measuring light reflected from the substrate;
- match the detection channel waveguide 19 array pitch at its exit to the pitch of the optical detector 25 pixels, ;
- match the optical apertures of the optical detectors 25;
- make the detection channel waveguides 19 with a curvature to reject stray light not coupled into the detection channel waveguides 19.

In particular, the detection channel waveguides 19 may be arranged on the detector side to match the pitch of the optical detector 25 pixels and the optical apertures of these optical detectors 25, or the entrance optics of these optical detectors 25.

For instance, when using intensity detectors, it is desirable to have the light issued from different detection channel waveguides 19 projected on different pixels of the optical detector 25 to avoid cross-talk. This may be achieved by providing detection channel waveguides 19 with a pitch at their exit side for instance corresponding to twice the detector pixel pitch (to have one pixel over two used for cross-talk isolation). If the optical detector has an imaging entrance stage, the detection channel waveguides 19 may be arranged with a pitch and a numerical aperture so as to match the detector pixel pitch in the same way through that imaging stage.

When using spectral detector, it is desirable to have the light issued from different detection channel waveguides 19 and spectrally dispersed projected on different rows of pixels of the optical detector 25, to avoid cross-talk. This may also be achieved by providing detection channel waveguides 19 with a pitch at their exit side for instance corresponding to twice the detector pixel pitch (to have one row of pixel over two used for cross-talk isolation). Of course, as previously, the imaging entrance stage of the optical detectors 25 has to be taken into account.

The sensor of the invention further comprises means for control and data processing such as computer, microcontroller and/or FPGA modules 23, connected to the optical detectors 25.

The first and second integrated optics circuits 11 and 20 are aligned relatively to each other and to the focusing lens 10, and are made to stay permanently in close contact with the beam splitter 22.

In particular, in some modes of realization, the first and second integrated optics circuits 11 and 20 are bounded or glued to the beam splitter 22 so as to form a single piece or monolithic arrangement. A method for doing the permanent connection is to use an optical adhesive in or around the optical paths. A mechanically robust and optically stable device is then manufactured.

Alignment optical channel waveguides 26, 27 can be added respectively to the first integrated optics circuit 11 and to the second integrated optics circuit 20 in order to provide alignment means. Those alignment optical channel waveguides 26, 27 can be coupled permanently or temporarily to optical fibers guiding the light from a pilot light and/or to a monitoring device (power meter or camera for examples).

For instance, a first set of alignment waveguides 26 is used to align the first integrated optics circuit 11 in the focal plane (or an imaging plane) of the focusing lens 10. These first alignment waveguides 26 are arranged on both sides of the emission channel waveguides 12 and have an emitting aperture located close to the emitting apertures 29 of these emission channel waveguides 12.

In a first step of alignment, light is injected in these first alignment waveguides 26 towards the focusing lens arrangement 10 and a reference object 17 or mirror placed at a reference position or a conjugate plane of the focusing lens arrangement 10. Reflected light is collected back in these first alignment waveguides 26. The relative positioning of the focusing lens arrangement 10 and the first integrated optics circuit 11 is adjusted by optimizing this coupling.

Then, a second set of alignment waveguides 27 on the second integrated optics circuit 20 is used to align this second integrated optics circuit 20 relative to the first integrated optics circuit 11. These second alignment waveguides 27 have collection apertures 18 designed to be in confocal arrangement with the emitting apertures of the first alignment waveguides 12 through the focusing lens arrangement 10.

In a second step of alignment, light is injected in the first alignment waveguides 26 towards the focusing lens arrangement 10 and a reference object 17 or mirror placed at a reference position or a conjugate plane of the focusing lens arrangement 10. The second integrated optics circuit 20 is then positioned so as to optimize the reflected light coupled in the second alignment waveguides 27.

At that stage, the relative alignment of the first integrated optics circuit 11, the second integrated optics circuit 20, the beam slitter cube 22 and the focusing lens arrangement 10 is achieved. All pieces can be fixed together.

In a last step, optical detectors 25 can be aligned relative to the optical detection channel waveguides 19 using the light propagated in these detection channel waveguides 19.

In addition to providing a mean to optimize the performance of the confocal device, the alignment optical channel waveguides 26, 27 can also be used to automate the device assembly process.

The first and second integrated optics circuits 11, 20 may be done with several techniques to produce optical waveguides, which are areas with a higher index of refraction embedded in a transparent substrate with a lower index of refraction. For instance, the integrated optics circuits may be done using an ion exchange process on a glass substrate. Such ion exchange occurs between a glass substrate and a molten salt bath when these are suitably brought into contact. This phenomenon locally increases the optical index of the glass by modifying its composition.

A thin metal layer is deposited on a glass substrate. Openings with a size of a few microns to a few tens of microns, with designs corresponding to waveguides, Y-junctions and other components, are opened in the metallic layer using a classical photolithography technique.

A one-step or two-steps ion-exchange process may be implemented to create the waveguides on, or below, the glass surface.

The first step consists in diffusing at high temperature ions such as silver or potassium ions into the glass wafer using a molten salt bath, so as to create surface waveguides.

Then, if applicable (for instance with silver ions), an electric field may be applied for moving the ions and thus the waveguides deeper into the glass.

The integrated optics component may also be done using techniques involving deposition of layers of doped silica or other materials on wafers for constituting waveguides. The deposition steps usually involve CVD techniques.

The integrated optics component may also be done using direct inscription techniques. For instance, the waveguides may be done by modifying locally the index of refraction of a sol-gel substrate or a polymer resin with a UV laser beam, by photo-polymerization.

A Y-junction as used in the invention may comprise a first waveguide which is enlarged progressively in a tapered zone (or a taper) ending in two branching waveguides. The tapered zone is preferably smooth enough to allow an adiabatic transition with a spread of the spatial modes of the guided light issued from the first waveguide, which are coupled in the branching waveguides.

Such arrangement has the advantage of being essentially achromatic over a broad spectral range. So, a fixed split ratio (for instance 50/50) may be obtained over such broad spectral range.

In is to be noted that such achromatic behavior is not achievable with classical fiber based couplers or Y-splitters which rely on a propagation mode coupling scheme with a strong dependence on the wavelength.

With reference to Fig. 2, the first integrated optics circuit 11, the second integrated optics circuit 20 and the beam splitter 22 may be arranged so that the first integrated circuit 11 and the second integrated optics circuit 20 are facing orthogonal faces of the beam splitter 22 (as in the configuration of Fig. 1), but are also arranged so that their waveguide planes are orthogonal to each other (while in the arrangement of Fig. 1 the waveguide planes of these integrated circuit are parallel to each other or in the same plane).

Such configuration has the advantage of requiring a much smaller beam splitter cube 22, which may be for instance in the shape of an elongated bar.

The device of the invention has been described for a chromatic confocal configuration.

As previously explained, it may also be used to implement other detection schemes, some examples of which are explained below. All what has been previously explained, in particular in relation with Fig. 1, Fig. 2 and Fig. 3a is applicable to these other modes of realization, except for the differences which are explained below.

According to another mode of realization, with reference to Fig. 3b, the device of the invention may implement a confocal detection scheme. In that case:
- The light source 14 may be a monochromatic (laser) or a broadband source;
- The focusing lens arrangement 10 may comprise achromatic lenses 33 with a high NA for focusing the measurement beam on the surface of the object 17;
- The optical detectors 25 may comprise intensity detectors.

The device may further comprise a Z-scanning stage 34 to move relatively the sensor and the object 17 along the Z axis. The height of the surface of the object 17 may then be obtained at the measurement points from the position of the Z-scanning stage 34 for which a maximum of intensity is obtained on the intensity optical detectors 25.

According to another mode of realization, with reference to Fig. 3c, the device of the invention may implement an interferometric detection scheme based on a low-coherence interferometry technique.

According to a first variant, a low-coherence interferometry technique in the spectral domain may be implemented. In that case:
- The light source 14 may be a broadband source;
- The focusing lens arrangement 10 may comprise achromatic lenses 35 for focusing the measurement beam on the surface of the object 17, and optionally a reference plate 32 of the interferometer;
- The optical detectors 25 may comprise spectral detectors.

In that configuration, the intensity spectrum of the light as obtained by the spectral optical detectors 25 is modulated by the interferences between beams reflected by the reference plate 32, and/or interfaces of the object 17. The height between the reference plate 32 and the object 17, and/or the thickness of layers of the object 17 may be obtained from that intensity spectrum using well-known techniques.

According to a second variant, a low-coherence interferometry technique with a swept source may be implemented. In that case:
- The light source 14 may be a swept laser;
- The focusing lens arrangement 10 may comprise achromatic lenses 35 for focusing the measurement beam on the surface of the object 17, and optionally a reference plate 32 of the interferometer;
- The optical detectors 25 may comprise intensity detectors;

In that configuration, an intensity spectrum of the light as obtained by sweeping the frequency of the light source 14 over a frequency range and acquiring the light intensity for each frequency with the intensity light detectors 25. As previously, the height between the reference plate 32 and the object 17, and/or the thickness of layers of the object 17 may be obtained from that intensity spectrum using well-known techniques.

While this invention has been described in conjunction with a number of embodiments, it is evident that many alternatives, modifications and variations would be or are apparent to those of ordinary skill in the applicable arts. The invention is defined in the appended claims.

## Claims

1. A multichannel confocal sensor comprising at least one light source (14), at least one focusing lens arrangement (10), at least one optical detector (25), and further comprising:
- a first integrated optics circuit (11) arranged for splitting a light beam (24) coming from said at least one light source (14) into a plurality of emitted light beams applied to a high-density array of emitting apertures (29),
- a second integrated optics circuit (20) arranged for collecting on a plurality of collection apertures (18) a plurality of reflected light beams from a sample (17) to be inspected and for transferring said reflected light beams to said at least one optical detector (25),
- a beam splitter (22) arranged (i) for directing said emitted light beams from said first integrated optics circuit (11) to said inspected sample (17) through said at least one focusing lens arrangement (10) and (ii) for directing said reflected light beams from said inspected sample (17) through said at least one focusing lens arrangement (10) into said second integrated optics circuit (20),
said first integrated optics circuit (11) comprising arrays of emission channel waveguides (12), wherein said emission channel waveguides (12) comprise single mode waveguides within the spectral range of the light source (14).

2. The sensor of Claim 1, wherein the first integrated optics circuit (11) comprises arrays of emission channel waveguides (12) substantially achromatic within the spectral range of the light source (14), and having an end forming the emitting apertures (29).

3. The sensor of Claim 2, wherein the first integrated optics circuit (11) further comprises Y-junctions splitters substantially achromatic within the spectral range of the light source (14).

4. The sensor of Claim 2 or 3, wherein the second integrated optics circuit (20) comprises arrays of optical detection channel waveguides (19) substantially achromatic within the spectral range of the light source (14), and having a first end forming the collection apertures (18).

5. The sensor of Claim 4, wherein the optical detection channel waveguides (19) and the optical emission channel waveguides (12) have a same spacing at, respectively, the collection apertures (18) and the emitting apertures (29) side.

6. The sensor of Claim 4 or 5, wherein the optical detection channel waveguides (19) have a larger diameter than those of the optical emission channel waveguides (12).

7. The sensor of any of Claims 4 to 6, wherein the optical detection channel waveguides (19) have a larger angle acceptance at the collection apertures (18) side than those of the optical emission channel waveguides (12) at the emitting apertures (29) side.

8. The sensor of any of Claims 6 or 7, wherein the detection channel waveguides (19) comprise multimode waveguides, within the spectral range of the light source (14).

9. The sensor of any of Claims 4 to 8, wherein the detection channel waveguides (19) are designed to match on a second end the aperture and/or pixel pitch of detection elements of said at least one optical detector (25), directly or in a conjugate plane.

10. The sensor of any of Claims 4 to 9, wherein the detection channel waveguides (19) are arranged so that said at least one optical detector (25) is out-of-sight of stray light coupled in the second integrated circuit between the detection channel waveguides (19) at the collection apertures (18).

11. The sensor of any of preceding Claims, wherein at least one of first and second integrated optics circuits (11, 20) comprise planar waveguides on a planar substrate.

12. The sensor of Claim 11, which comprises first and second integrated optics circuits (11, 20) made on planar substrates arranged with an edge respectively facing a side of the beam splitter (22) in the form of a beam splitter cube.

13. The sensor of any of preceding Claims, wherein the first and second integrated optics circuits further include alignment optical channel waveguides.

14. The sensor of any of the preceding Claims, wherein the first and second integrated optics circuits (11, 20) and the beam splitter (22) are fixed permanently to each other.

15. The sensor of any of preceding Claims, wherein the focusing lens arrangement (10) comprises a chromatic lens with an extended axial chromatism.

16. The sensor of any of the preceding Claims, wherein said at least one optical detector (25) comprises one of the following sensors:
- an intensity optical detector with an array or a matrix of detection elements or pixels, with pixels respectively receiving the light, over its whole spectrum, collected by a single collection aperture (18);
- a spectral optical detector with a filtering or spectrally dispersing element and an array or a matrix of detection elements or pixels, with pixels respectively receiving the light, over a subpart of its spectrum, collected by a single collection aperture (18).

17. A method for inspecting a sample (17), implemented in a multichannel confocal sensor according to any of preceding Claims, comprising the steps of:
- emitting a light beam from a at least one light source (14),
- splitting said light beam into a plurality of emitted light beams,
- directing said plurality of emitted light beams, through a focusing lens arrangement (10), onto said inspected sample (17),
- collecting reflected light beams from said inspected sample (17) through said focusing lens arrangement (10), and
- directing said collected reflected light beams to at least one optical detector (25),
**characterized in that**:
- said splitting step is implemented in a first integrated optics circuit (11),
- said collecting step is implemented in a second integrated optics circuit (20), and
- said directing steps are implemented in a beam splitter (22).

18. The method of Claim 17, further comprising the following steps:
- Varying the height of the sensor relative to the sample (14); and using an achromatic focusing lens arrangement (10) and an intensity optical detector (25), detecting intensity over the full spectrum of collected reflected light beams; or
- Using an achromatic focusing lens arrangement (10) and a spectral optical detector (25), detecting spectra of collected reflected light beams; or
- Using a chromatic focusing lens arrangement (10) and a spectral optical detector (25), detecting spectra of collected reflected light beams;
- Using a chromatic focusing lens arrangement (10) and an intensity detector (25), detecting intensity over the full spectrum of collected reflected light beams.

## Patentansprüche

1. Mehrkanaliger konfokaler Sensor, umfassend wenigstens eine Lichtquelle (14), wenigstens eine Fokussierlinsenanordnung (10), wenigstens einen optischen Detektor (25), und ferner umfassend:
- eine erste integrierte optische Schaltung (11), die angeordnet ist zum Aufteilen eines von der wenigstens einen Lichtquelle (14) kommenden Lichtstrahls (24) in eine Vielzahl emittierter Lichtstrahlen, die auf eine hochdichte Anordnung von Emissionsaperturen (29) aufgebracht werden,
- eine zweite integrierte optische Schaltung (20), die angeordnet ist zum Sammeln einer Vielzahl reflektierter Lichtstrahlen auf einer Vielzahl von Sammelaperturen (18) von einer zu untersuchenden Probe (17) und zum Übertragen der reflektierten Lichtstrahlen auf den wenigstens einen optischen Detektor (25),
- einen Strahlenteiler (22), der angeordnet ist (i) zum Lenken der emittierten Lichtstrahlen von der ersten integrierten optischen Schaltung (11) zu der untersuchten Probe (17) durch die wenigstens eine Fokussierlinsenanordnung (10) und (ii) zum Lenken der reflektierten Lichtstrahlen von der untersuchten Probe (17) durch die wenigstens eine Fokussierlinsenanordnung (10) in die zweite integrierte optische Schaltung (20),
wobei die erste integrierte optische Schaltung (11) Anordnungen von Emissionskanalwellenleitern (12) aufweist, wobei die Emissionskanalwellenleiter (12) Einmoden-Wellenleiter im Spektralbereich der Lichtquelle (14) aufweisen.

2. Sensor gemäß Anspruch 1, wobei die erste integrierte optische Schaltung (11) Anordnungen von Emissionskanalwellenleitern (12) umfasst, welche im Spektralbereich der Lichtquelle (14) im Wesentlichen achromatisch sind und ein Ende aufweisen, welche die Emissionsaperturen (29) bilden.

3. Sensor gemäß Anspruch 2, wobei die erste integrierte optische Schaltung (11) ferner Y-Verzweigungs-Teiler umfasst, welche im Spektralbereich der Lichtquelle (14) im Wesentlichen achromatisch sind.

4. Sensor gemäß Anspruch 2 oder 3, wobei die zweite integrierte optische Schaltung (20) Anordnungen optischer Detektionskanal-Wellenleiter (19) umfasst, welche im Spektralbereich der Lichtquelle (14) im Wesentlichen achromatisch sind und ein erstes Ende aufweisen, welche die Sammelaperturen (18) bilden.

5. Sensor gemäß Anspruch 4, wobei die optischen Detektionskanal-Wellenleiter (19) und die optischen Emissionskanalwellenleiter (12) jeweils denselben Abstand auf der Seite der Sammelaperturen (18) und der Seite der Emissionsaperturen (29) aufweisen.

6. Sensor gemäß Anspruch 4 oder 5, wobei die optischen Detektionskanal-Wellenleiter (19) einen größeren Durchmesser als die optischen Emissionskanalwellenleiter (12) aufweisen.

7. Sensor gemäß einem der Ansprüche 4 bis 6, wobei die optischen Detektionskanal-Wellenleiter (19) auf der Seite der Sammelaperturen (18) einen größeren Akzeptanzwinkel aufweisen als die optischen Emissionskanalwellenleiter (12) auf der Seite der Emissionsaperturen (29).

8. Sensor gemäß einem der Ansprüche 6 oder 7, wobei die Detektionskanal-Wellenleiter (19) im Spektralbereich der Lichtquelle (14) Mehrmoden-Wellenleiter umfassen.

9. Sensor gemäß einem der Ansprüche 4 bis 8, wobei die Detektionskanal-Wellenleiter (19) so ausgebildet sind, dass sie an einem zweiten Ende der Öffnung und/oder dem Pixelabstand der Detektionselemente des wenigstens einen optischen Detektors (25) angepasst sind, unmittelbar oder in einer konjugierten Ebene.

10. Sensor gemäß einem der Ansprüche 4 bis 9, wobei die Detektionskanal-Wellenleiter (19) so angeordnet sind, dass wenigstens ein optischer Detektor (25) außerhalb des Bereichs von Streulicht ist, welches in die zweite integrierte Schaltung zwischen den Detektionskanal-Wellenleitern (19) an den Sammelaperturen (18) gekoppelt ist.

11. Sensor gemäß einem der vorhergehenden Ansprüche, wobei wenigstens die erste und/oder die zweite integrierte optische Schaltung (11, 20) planare Wellenleiter auf einem planaren Substrat umfassen.

12. Sensor gemäß Anspruch 11, umfassend eine erste und eine zweite integrierte optische Schaltung (11, 20), die auf planaren Substraten angeordnet sind, wobei eine Kante jeweils einer Seite des Strahlenteilers (22) in Form eines Strahlenteiler-Würfels gegenüber liegt.

13. Sensor gemäß einem der vorhergehenden Ansprüche, wobei die erste und die zweite integrierte optische Schaltung ferner Kanal-Wellenleiter zur optischen Ausrichtung aufweisen.

14. Sensor gemäß einem der vorhergehenden Ansprüche, wobei die erste und die zweite integrierte optische Schaltung (11, 20) und der Strahlenteiler (22) dauerhaft aneinander fixiert sind.

15. Sensor gemäß einem der vorhergehenden Ansprüche, wobei die Fokussierlinsenanordnung (10) eine chromatische Linse mit erweitertem Farblängsfehler umfasst.

16. Sensor gemäß einem der vorhergehenden Ansprüche, wobei der wenigstens eine optische Detektor (25) einen der folgenden Sensoren aufweist:
- einen optischen Intensitäts-Detektor mit einer Anordnung oder einer Matrix von Detektionselementen oder Pixeln, wobei die Pixel über sein gesamtes Spektrum jeweils das Licht aufnehmen, das durch eine einzige Sammelapertur (18) aufgenommen wird;
- einen optischen Spektral-Detektor mit einem Filter- oder spektralen Zerlegungselement und einer Anordnung oder einer Matrix von Detektionselementen oder Pixeln, wobei die Pixel über einen Teil seines Spektrums jeweils das Licht aufnehmen, das durch eine einzige Sammelapertur (18) gesammelt wird.

17. Verfahren zum Untersuchen einer Probe (17), implementiert in einem mehrkanaligen konfokalen Sensor gemäß einem der vorhergehenden Ansprüche, umfassend die Schritte:
- Emittieren eines Lichtstrahls von wenigstens einer Lichtquelle (14),
- Aufspalten des Lichtstrahls in eine Vielzahl emittierter Lichtstrahlen,
- Leiten der Vielzahl emittierter Lichtstrahlen durch eine Fokussierlinsenanordnung (10) zu der untersuchten Probe (17),
- Sammeln reflektierter Lichtstrahlen von der untersuchten Probe (17) durch die Fokussierlinsenanordnung (10), und
- Leiten der gesammelten reflektierten Lichtstrahlen zu wenigstens einem optischen Detektor (25),
**dadurch gekennzeichnet, dass**:
- der Schritt des Aufspaltens in einer ersten integrierten optischen Schaltung (11) implementiert wird,
- der Schritt des Sammelns in einer zweiten integrierten optischen Schaltung (20) implementiert wird, und
- die Schritte des Leitens in einem Strahlenteiler (22) implementiert werden.

18. Verfahren gemäß Anspruch 17, ferner umfassend folgende Schritte:
- Variieren der Höhe des Sensors im Verhältnis zur Probe (14); und Verwenden einer achromatischen Fokussierlinsenanordnung (10) und eines optischen Intensitäts-Detektors (25) zum Detektieren der Intensität über das gesamte Spektrum der gesammelten reflektierten Lichtstrahlen; oder
- Verwenden einer achromatischen Fokussierlinsenanordnung (10) und eines optischen Spektral-Detektors (25), zum Detektieren der Spektren der gesammelten reflektierten Lichtstrahlen; oder
- Verwenden einer chromatischen Fokussierlinsenanordnung (10) und eines optischen Spektral-Detektors (25), zum Detektieren der Spektren der gesammelten reflektierten Lichtstrahlen;
- Verwendung einer chromatischen Fokussierlinsenanordnung (10) und eines Intensitäts-Detektors (25), zum Detektieren der Intensität über das gesamte Spektrum der gesammelten reflektierten Lichtstrahlen.

## Revendications

1. Capteur confocal multicanal comportant au moins une source de lumière (14), au moins un agencement de lentilles de focalisation (10), au moins un détecteur optique (25), et comprenant par ailleurs :
- un premier circuit optique intégré (11) agencé pour diviser un faisceau lumineux (24) en provenance de ladite au moins une source de lumière (14) en une pluralité de faisceaux lumineux émis appliqués sur un réseau à haute densité d'ouvertures d'émission (29),
- un deuxième circuit optique intégré (20) agencé pour collecter sur une pluralité d'ouvertures de collecte (18) une pluralité de faisceaux lumineux réfléchis en provenance d'un échantillon (17) destiné à être inspecté et pour transférer lesdits faisceaux lumineux réfléchis audit au moins un détecteur optique (25),
- un diviseur de faisceau (22) agencé (i) pour diriger lesdits faisceaux lumineux émis en provenance dudit premier circuit optique intégré (11) sur ledit échantillon inspecté (17) au travers dudit au moins un agencement de lentilles de focalisation (10) et (ii) pour diriger lesdits faisceaux lumineux réfléchis en provenance dudit échantillon inspecté (17) au travers dudit au moins un agencement de lentilles de focalisation (10) jusque dans ledit deuxième circuit optique intégré (20),
ledit premier circuit optique intégré (11) comprenant des réseaux de guides d'ondes de canaux d'émission (12), dans lequel lesdits guides d'ondes de canaux d'émission (12) comprennent des guides d'ondes monomode dans le domaine spectral de la source de lumière (14).

2. Capteur selon la revendication 1, dans lequel le premier circuit optique intégré (11) comprend des réseaux de guides d'ondes de canaux d'émission (12) sensiblement achromatiques dans le domaine spectral de la source de lumière (14), et ayant une extrémité formant les ouvertures d'émission (29).

3. Capteur selon la revendication 2, dans lequel le premier circuit optique intégré (11) comprend en outre des diviseurs de jonctions en Y sensiblement achromatiques dans le domaine spectral de la source de lumière (14).

4. Capteur selon la revendication 2 ou 3, dans lequel le deuxième circuit optique intégré (20) comprend des réseaux de guides d'ondes de canaux de détection optiques (19) sensiblement achromatiques dans le domaine spectral de la source de lumière (14), et ayant une première extrémité formant les ouvertures de collecte (18).

5. Capteur selon la revendication 4, dans lequel les guides d'ondes de canaux de détection optiques (19) et les guides d'ondes de canaux d'émission optique (12) ont un même espacement, respectivement, du côté des ouvertures de collecte (18) et du côté des ouvertures d'émission (29).

6. Capteur selon la revendication 4 ou 5, dans lequel les guides d'ondes de canaux de détection optiques (19) ont un diamètre supérieur par rapport au diamètre des guides d'ondes de canaux d'émission optique (12).

7. Capteur selon l'une quelconque des revendications 4 à 6, dans lequel les guides d'ondes de canaux de détection optiques (19) ont un angle d'acceptation supérieur du côté des ouvertures de collecte (18) par rapport à l'angle d'acceptation des guides d'ondes de canaux d'émission optique (12) du côté des ouvertures d'émission (29).

8. Capteur selon l'une quelconque des revendications 6 ou 7, dans lequel les guides d'ondes de canaux de détection (19) comprennent des guides d'ondes multimode, dans le domaine spectral de la source de lumière (14).

9. Capteur selon l'une quelconque des revendications 4 à 8, dans lequel les guides d'ondes de canaux de détection (19) sont conçus pour correspondre à une deuxième extrémité à l'ouverture et/ou au pas de pixel d'éléments de détection dudit au moins un détecteur optique (25), directement ou dans un plan conjugué.

10. Capteur selon l'une quelconque des revendications 4 à 9, dans lequel les guides d'ondes de canaux de détection (19) sont agencés de telle sorte que ledit au moins un détecteur optique (25) est hors de vue de la lumière parasite couplée dans le deuxième circuit intégré entre les guides d'ondes de canaux de détection (19) au niveau des ouvertures de collecte (18).

11. Capteur selon l'une quelconque des revendications précédentes, dans lequel au moins l'un parmi les premier et deuxième circuits optiques intégrés (11, 20) comprend des guides d'ondes de type plan sur un substrat plan.

12. Capteur selon la revendication 11, comprenant des premier et deuxième circuits optiques intégrés (11, 20) réalisés sur des substrats plans agencés avec un bord orienté respectivement vers un côté du diviseur de faisceau (22) sous la forme d'un cube de diviseur de faisceau.

13. Capteur selon l'une quelconque des revendications précédentes, dans lequel les premier et deuxième circuits optiques intégrés comprennent par ailleurs des guides d'ondes de canaux optiques d'alignement.

14. Capteur selon l'une quelconque des revendications précédentes, dans lequel les premier et deuxième circuits optiques intégrés (11, 20) et le diviseur de faisceau (22) sont fixés de manière permanente les uns par rapport aux autres.

15. Capteur selon l'une quelconque des revendications précédentes, dans lequel l'agencement de lentilles de focalisation (10) comporte une lentille chromatique avec un chromatisme axial étendu.

16. Capteur selon l'une quelconque des revendications précédentes, dans lequel ledit au moins un détecteur optique (25) comprend l'un des capteurs suivants :
- un détecteur optique d'intensité avec un réseau ou une matrice de pixels ou d'éléments de détection, les pixels recevant respectivement la lumière, sur l'ensemble de son spectre, collectée par une seule ouverture de collecte (18) ;
- un détecteur optique spectral avec un élément filtrant ou spectralement dispersant et un réseau ou une matrice de pixels ou d'éléments de détection, les pixels recevant respectivement la lumière, sur une sous-partie de son spectre, collectée par une seule ouverture de collecte (18).

17. Procédé d'inspection d'un échantillon (17), mis en œuvre dans un capteur confocal multicanal selon l'une quelconque des revendications précédentes, comprenant les étapes consistant à :
- émettre un faisceau lumineux en provenance d'au moins une source de lumière (14),
- diviser ledit faisceau lumineux en une pluralité de faisceaux lumineux émis,
- diriger ladite pluralité de faisceaux lumineux émis, au travers d'un agencement de lentilles de focalisation (10), jusque sur ledit échantillon inspecté (17),
- collecter des faisceaux lumineux réfléchis en provenance dudit échantillon inspecté (17) au travers dudit agencement de lentilles de focalisation (10), et
- diriger lesdits faisceaux lumineux réfléchis collectés jusqu'à au moins un détecteur optique (25),
**caractérisé en ce que** :
- ladite étape consistant à diviser est mise en œuvre dans un premier circuit optique intégré (11),
- ladite étape consistant à collecter est mise en œuvre dans un deuxième circuit optique intégré (20), et
- lesdites étapes consistant à diriger sont mises en œuvre dans un diviseur de faisceau (22).

18. Procédé selon la revendication 17, comprenant par ailleurs les étapes suivantes consistant à :
- faire varier la hauteur du capteur par rapport à l'échantillon (14) ; et en utilisant un agencement de lentilles de focalisation achromatiques (10) et un détecteur optique d'intensité (25), détecter l'intensité sur le spectre tout entier de faisceaux lumineux réfléchis collectés ; ou
- en utilisant un agencement de lentilles de focalisation achromatiques (10) et un détecteur optique spectral (25), détecter des spectres de faisceaux lumineux réfléchis collectés ; ou
- en utilisant un agencement de lentilles de focalisation chromatiques (10) et un détecteur optique spectral (25), détecter des spectres de faisceaux lumineux réfléchis collectés ;
- en utilisant un agencement de lentilles de focalisation chromatiques (10) et un détecteur d'intensité (25), détecter l'intensité sur le spectre tout entier de faisceaux lumineux réfléchis collectés.
